# EUROPÄISCHE PATENTANMELDUNG

(11) **EP 0 990 889 A1**
(43) Veröffentlichungstag der Anmeldung: **05.04.2000**
(21) Anmeldenummer: 99116185.2
(22) Anmeldetag: 24.08.1999
(51) Int. Cl.: G01N 21/64

(54) **Fluoreszenz-Messvorrichtung**

(30) Priorität: 29.09.1998 DE 19844713
(71) Anmelder: GSF-Forschungszentrum für Umwelt und Gesundheit, GmbH, 85764 Oberschleissheim (DE)
(72) Erfinder: Stampfl, Andreas, 85354 Freising (DE); Kiefer, Franz, 83567 Unterreit (DE); Wiebel, Friedrich, Prof., 85386 Eching (DE)
(74) Vertreter: Reinhard - Skuhra - Weise & Partner

(57) **Zusammenfassung**

Die vorliegende Erfindung schafft eine Fluoreszenz-Meßvorrichtung mit einer Anregungsstrahlungs-Erzeugungseinrichtung (40) zum Erzeugen einer Anregungsstrahlung; einer Strahlführungseinrichtung (38, 39) zum Richten der Anregungsstrahlung auf eine Probe (540), die in einem Meßbereich (32) angeordnet ist; und einer Fluoreszenzstrahlungs-Erfassungseinrichtung (36) zum Erfassen der von der Probe (540) im Meßbereich (32) emittierten Fluoreszenzstrahlung. Eine Probenwechseleinrichtung (25) zum Auswechseln der Probe (540) in dem Meßbereich gegen eine andere einer Mehrzahl von bereitgestellten Proben (510; 520; 530; 540) ist vorhanden; und der Meßbereich ist räumlich abgeschlossen von der Anregungsstrahlungs-Erzeugungseinrichtung (40) und der Fluoreszenzstrahlungs-Erfassungseinrichtung (36) vorgesehen.

## Beschreibung

### STAND DER TECHNIK

Die vorliegende Erfindung betrifft eine Fluoreszenz-Meßvorrichtung mit einer Anregungsstrahlungs-Erzeugungseinrichtung zum Erzeugen einer Anregungsstrahlung, einer Strahlführungseinrichtung zum Richten der Anregungsstrahlung auf eine Probe, die in einem Meßbereich angeordnet ist, und einer Fluoreszenzstrahlungs-Erfassungseinrichtung zum Erfassen der von der Probe im Meßbereich emittierten Fluoreszenzstrahlung.

Obwohl auf beliebige Fluoreszenz-Meßvorrichtungen anwendbar, werden die vorliegende Erfindung sowie die ihr zugrundeliegende Problematik in bezug auf eine Biofluoreszenz-Meßvorrichtung erläutert.

Es sind derzeit sehr wenige Geräte bekannt, welche die Bestimmung von Biofluoreszenz, beispielsweise von Proteinen mit Grünfluoreszenz, ermöglichen. Bei einem bekannten Gerätetyp werden Zellen mittels speziell beschichteter Neonröhren angeregt, welche Licht im Ultraviolettbereich abstrahlen. Die Zellen befinden sich dazu in einem sogenannten Leuchtkasten.

Die bekannten Geräte ermöglichen keine gleichmäßige Anregung über den gesamten Probenträger und somit keine konstanten Anregungsbedingungen. Die Deckel der Kulturschalen, die beschlagen sein können, da keine Klimatisierung vorgesehen ist, erschweren die Messungen. Desweiteren ist es aufgrund der fehlenden Klimatisierungsmöglichkeit nicht möglich, die Entwicklung der Fluoreszenz über einen längeren Zeitraum der Größenordnung Tage zu beobachten, da die Zellen nicht steril und unter bestimmten atmosphärischen Bedingungen gehalten werden können.

Die der vorliegenden Erfindung zugrundeliegende Problematik besteht allgemein darin, daß mehrere Proben in kontrollierbarer Atmosphäre über einen längeren Zeitraum hin wiederholt automatisch vermessen werden sollen.

Beispielsweise interessiert im Rahmen der Biofluoreszenz die Expression anschaltbarer Gene in Säugerzellkulturen über einen Zeitraum der Größenordnung von Tagen. Insbesondere soll die Fluoreszenz, welche auf speziellen Proteinen beruht, beispielsweise von Proteinen mit Grünfluoreszenz, in bestimmten Zeitabständen mittels Licht bestimmter Wellenlänge, z.B. 380 nm, angeregt werden und das den verschiedenen Meßzeitpunkten entsprechende emittierte Licht erfaßt werden.

Eine weitere Anwendung ist die Bestimmung des freien intrazellulären Kalziums oder des pH-Werts mittels Doppelwellenanregung in Zellkulturen in Abhängigkeit der Belastung durch Noxen.

### VORTEILE DER ERFINDUNG

Die erfindungsgernäße Fluoreszenz-Meßvorrichtung mit den Merkmalen des Anspruchs 1 weist gegenüber den bekannten Lösungsansätzen den Vorteil auf, daß es eine automatische Beobachtung mehrerer Proben über einen längeren Zeitraum in der definierbaren Atmosphäre des abgeschlossenen Raums mit dem Meßbereich ermöglicht.

Die der vorliegenden Erfindung zugrundeliegende Idee besteht darin, den Meßbereich und die Meßgeräte räumlich zu trennen und den Meßbereich verschiedenen Proben durch die Probenwechseleinrichtung zugänglich zu machen. Zweckmäßigerweise befinden sich in dem abgeschlossenen Raum mit dem Meßbereich und den Proben keine elektronischen oder elektrischen Geräte, so daß dieser Raum beliebig klimatisierbar ist, ohne daß solche empfindlichen Geräte beeinflußt werden.

In den Unteransprüchen finden sich vorteilhafte Weiterbildungen und Verbesserungen der in Anspruch 1 angegebenen Fluoreszenz-Meßvorrichtung.

Gemäß einer bevorzugten Weiterbildung ist die Probenwechseleinrichtung derart gestaltet, daß sie dieselbe Probe jeweils stets in derselben räumlichen Orientierung in dem Meßbereich anordnet. Die Fluoreszenzstrahlungs-Erfassungeinrichtung ist dabei derart gestaltet, daß sie die Fluoreszenzstrahlung des gesamten Meßbereichs erfaßt.

Gemäß einer weiteren bevorzugten Weiterbildung umfaßt die Anregungsstrahlungs-Erzeugungseinrichtung eine Lichtquelle zum Erzeugen polychromatischer Strahlung sowie eine vorzugsweise umschaltbare Filtereinrichtung zum Herausfiltern der Anregungsstrahlung. So läßt sich die Fluoreszenz umschaltbar bei verschiedenen Lichtwellenlängen bestimmen.

Gemäß einer weiteren bevorzugten Weiterbildung befindet sich die Probenwechseleinrichtung in einem ersten abgeschlossenen Raum, der zum Einlaß der Anregungsstrahlung ein entsprechendes erstes transparentes Fenster, vorzugsweise ein Quarzglasfenster, mit einer Transmission oberhalb einer Wellenlänge von 360 nm, im Meßbereich aufweist.

Gemäß einer weiteren bevorzugten Weiterbildung befindet sich die Fluoreszenzstrahlungs-Erfassungeinrichtung in einem in einem zweiten abgeschlossenen Raum, der an den ersten abgeschlossenen Raum angrenzt und der zum Einlaß der Fluoreszenzstrahlung ein entsprechendes zweites transparentes Fenster, vorzugsweise ein Quarzglasfenster mit einer Transmission oberhalb einer Wellenlänge von 360 nm, im Meßbereich aufweist.

Gemäß einer weiteren bevorzugten Weiterbildung stimmt das erste Fenster mit dem zweiten Fenster überein.

Gemäß einer weiteren bevorzugten Weiterbildung umfaßt die Strahlführungseinrichtung einen im zweiten abgeschlossenen Raum befindlichen Lichtleiter oder Spiegel, mittels dem das Anregungslicht in den zweiten abgeschlossenen Raum von außerhalb desselben einkoppelbar ist.

Gemäß einer weiteren bevorzugten Weiterbildung umfaßt die Strahlführungseinrichtung eine im zweiten abgeschlossenen Raum befindliche Linseneinrichtung, mittels der das Anregungslicht vom Lichtleiter von unten auf das erste Fenster richtbar dieses gleichmäßig ausleuchtbar ist. Damit ist eine gleichmäßige Anregung der Probe möglich.

Gemäß einer weiteren bevorzugten Weiterbildung ist eine Intensitätserfassungseinrichtung zum Erfassen der im Meßbereich vorliegenden Intensität der Anregungsstrahlung vorgesehen. Dadurch läßt sich die gemessene Fluoreszenzstrahlung auf die Intensität der Anregungsstrahlung normieren.

Gemäß einer weiteren bevorzugten Weiterbildung sind die Proben jeweils in einem transparenten Behälter untergebracht, der von der Probenwechseleinrichtung auf dein Boden des ersten abgeschlossenen Raums verschiebbar ist.

Gemäß einer weiteren bevorzugten Weiterbildung umfaßt die Probenwechseleinrichtung einen Drehteller umfaßt, in dem die Proben angebracht sind.

Gemäß einer weiteren bevorzugten Weiterbildung umfassen die transparenten Behälter Petrischalen oder Mikrotitterplatten umfassen, in denen jeweils eine Mehrzahl von räumlich getrennten Zellkulturen vorgesehen sind, und daß die Fluoreszenzstrahlungs-Erfassungeinrichtung derart gestaltet ist, daß sie die Fluoreszenzstrahlung im Meßbereich mit einer räumlichen Auflösung erfaßt, welche zumindest so groß wie die einzelnen Zellkulturen ist.

Gemäß einer weiteren bevorzugten Weiterbildung ist der erste abgeschlossene Raum durch eine Klimatisierungseinrichtung insbesondere hinsichtlich Temperatur, Luftfeuchte und CO₂-Gehalt klimatisierbar.

Gemäß einer weiteren bevorzugten Weiterbildung sind der erste abgeschlossene Raum und/oder der zweite abgeschlossene Raum lichtdicht gegenüber Umgebungslicht.

Gemäß einer weiteren bevorzugten Weiterbildung ist eine Steuereinrichtung zum Steuern der Anregungsstrahlungs-Erzeugungseinrichtung, der Strahlführungseinrichtung, der Fluoreszenzstrahlungs-Erfassungeinrichtung und der Probenwechseleinrichtung vorgesehen.

Gemäß einer weiteren bevorzugten Weiterbildung ist eine Auswerteeinrichtung zum Auswerten der Messungen unter Berücksichtigung der Intensität der Anregungsstrahlung vorgesehen.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung einer Fluoreszenz-Meßvorrichtung als Ausführungsbeispiel der vorliegenden Erfindung; und
- Fig. 2: eine vergrößerte Darstellung auf die Probenwechselvorrichtung der Fluoreszenz-Meßvorrichtung als Ausführungsbeispiel der vorliegenden Erfindung nach Fig. 1.

### BESCHREIBUNG DER AUSFÜHRUNGSBEISPIELE

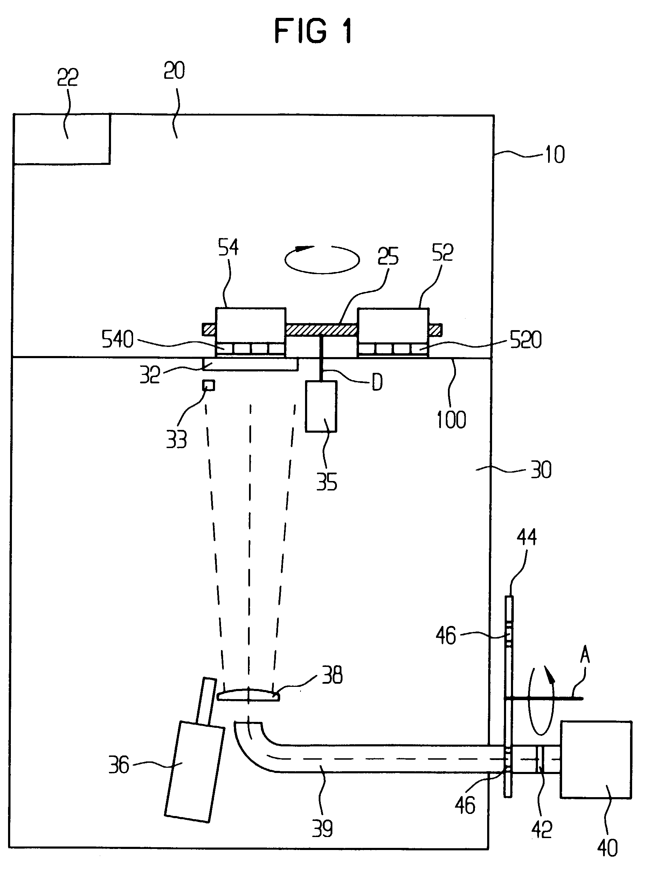

Fig. 1 zeigt eine schematische Darstellung einer Fluoreszenz-Meßvorrichtung als Ausführungsbeispiel der vorliegenden Erfindung.

In Fig. bezeichnet Bezugszeichen 40 eine Anregungsstrahlungs-Erzeugungseinrichtung in Form einer Xenon-Lampe und 42 eine Verschlußeinrichtung bzw. einen Shutter.

Die Anregungsstrahlungs-Erzeugungseinrichtung 40 erzeugt polychromatische Strahlung und daher ist eine umschaltbare Filtereinrichtung 46 zum Herausfiltern der gewünschten monochromatischen Anregungsstrahlung vorgesehen. Die Umschaltung erfolgt mittels eines Filterrades 44, an dem Filter mit verschiedenen Durchlaßbereichen angeordnet sind.

Es ist ein Gehäuse 10 vorgesehen, welches einen ersten abgeschlossen Raum 20 und einen zweiten abgeschlossenen Raum 30 aufweist, welche durch ein für die Anregungsstrahlung und die Fluoreszenzstrahlung transparentes Fenster 32 in Form eines Quarzglasfensters mit einer Transmission oberhalb einer Wellenlänge von 360 nm verbunden sind.

Der eigentliche Meßbereich befindet sich unmittelbar oberhalb des transparenten Fensters 32. Bevor darauf näher eingegangen wird, soll zunächst der Anregungs- und Meßteil der Vorrichtung näher erläutert werden.

Eine Strahlführungseinrichtung 38, 39 zum Richten der Anregungsstrahlung auf das transparente Fenster 32 ist im zweiten zweiten abgeschlossenen Raum 30 vorgesehen. Die Strahlführungseinrichtung 38, 39 umfaßt einen im zweiten abgeschlossenen Raum 30 befindlichen Lichtleiter 39, mittels dem das Anregungslicht in den zweiten abgeschlossenen Raum 30 von der außerhalb befindlichen Anregungsstrahlungs-Erzeugungseinrichtung 40 einkoppelbar ist. Es ist im übrigen auch eine Einkopplung mit einem Spiegel möglich.

Im zweiten abgeschlossenen Raum 30 am Austritt des Lichtleiters 39 befindet sich eine Linseneinrichtung 38, mittels der das Anregungslicht vom Lichtleiter 39 auf das erste Fenster 32 richtbar ist.

Weiterhin befindet sich im zweiten abgeschlossenen Raum 30 eine Fluoreszenzstrahlungs-Erfassungseinrichtung 36 in Form einer ortsauflösenden Kamera zum Erfassen vom Meßbereich durch das transparente Fenster 32 emittierten Fluoreszenzstrahlung.

Unmittelbar unterhalb des transparenten Fensters 32 ist eine Intensitätserfassungseinrichtung 33 zum Erfassen der im Meßbereich vorliegenden Intensität der Anregungsstrahlung vorgesehen.

Schließlich befindet sich im zweiten abgeschlossenen Raum ein Antriebsmotor 35 mit einer Drehwelle D, welche durch eine Trennwand 100 zwischen dem ersten und zweiten abgeschlossenen Raum geführt ist.

Der Antriebsmotor 35 mit einer Drehwelle D dient zum Anrieb einer Probenwechseleinrichtung 25 zum Auswechseln der Probe 540 in dem Meßbereich gegen eine andere einer Mehrzahl von bereitgestellten Proben 510, 520, 530, 540.

Die Probenwechseleinrichtung 25 im ersten abgeschlossenen Raum umfaßt einen von der Drehwelle D drehbaren Drehteller, in dein die Proben 510, 520, 530, 540 in entsprechenden Behältern 51, 52, 53, 54 fest angebracht sind.

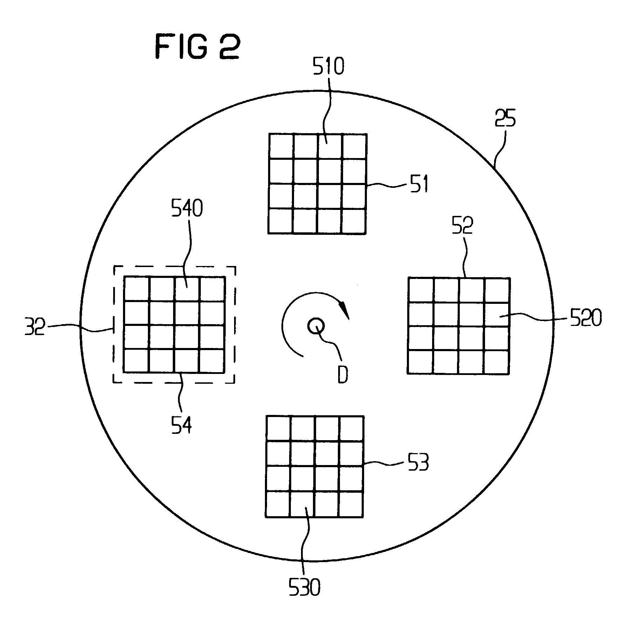

Fig. 2 zeigt eine vergrößerte Darstellung auf die Probenwechselvorrichtung der Fluoreszenz-Meßvorrichtung als Ausführungsbeispiel der vorliegenden Erfindung nach Fig. 1.

Die Probenwechseleinrichtung 25 ist derart gestaltet, daß sie dieselbe Probe 540 jeweils stets im wesentlichen in derselben räumlichen Orientierung in dem Meßbereich anordnet. Dies wird so erreicht, daß jede Probe fest, d.h. unverrückbar und selbst nicht drehbar, im Drehteller steht, so daß sie nach einer ganzen Umdrehung des Drehtellers bzw. nach einer teilweisen Drehung und entsprechenden Rückdrehung des Drehtellers wieder an ihrer ursprünglichen Position im Meßbereich über dein transparenten Fenster 32 ist.

Die Proben 510, 520, 530, 540 sind jeweils in einem zumindest nach unten für die Anregungsstrahlung und die Flureszenzstrhlung transparenten Behälter 51, 52, 53, 54 untergebracht sind, der von der Probenwechseleinrichtung 25 in Form des Drehtellers auf dem Boden des ersten abgeschlossenen Raums 20 verschiebbar ist. Die transparenten Behälter 51, 52, 53, 54 sind Petrischalen oder Mikrotitterplatten, in denen jeweils eine Mehrzahl von räumlich getrennten Zellkulturen vorgesehen sind, nämlich im vorliegenden Beispiel eine Matrix von 4x4 Zellkulturen.

Die Fluoreszenzstrahlungs-Erfassungeinrichtung 36 in Form der Kamera ist derart gestaltet, daß sie die Fluoreszenzstrahlung im gesamten Meßbereich erfaßt.

Der erste abgeschlossene Raum 20 ist durch eine Klimatisierungseinrichtung 22 hinsichtlich Temperatur, Luftfeuchte und CO₂-Gehalt klimatisierbar.

Zur Vermeidung von Störlicht sind der erste abgeschlossene Raum (20) und/oder der zweite abgeschlossene Raum (30) lichtdicht gegenüber Umgebungslicht.

Nicht in den Figuren dargestellt sind eine Steuereinrichtung zum Steuern der einer Anregungsstrahlungs-Erzeugungseinrichtung 40, der Fluoreszenzstrahlungs-Erfassungseinrichtung 36 und der Probenwechseleinrichtung 25 für einen sequentiellen Meßablauf sowie eine Auswerteeinrichtung, z.B. in Form eines Personalcomputers mit Bildbearbeitungsprogrammen, zum Auswerten der Messungen vorzugsweise unter Berücksichtigung der Intensität der Anregungsstrahlung.

Im folgenden wird ein typischer Meßablauf beschrieben. Die Behälter 51, 52, 53, 54 werden mit verschiedenen Zellkulturen befüllt und die Atmosphäre im ersten abgeschlossenen Raum 20 entsprechend geregelt.

Die Behälter 51, 52, 53, 54 werden dann durch die Probenwechseleinrichtung 25 in definierten Zeitabständen auf den Meßbereich über dem transparenten Fenster 32 bewegt. Dort findet dann eine jeweilige Messung statt. Somit können die Zellen über einen längeren Zeitraum in Kultur gehalten werden und ihre Entwicklung über die Fluoreszenz zeitlich verfolgt werden. Die Probenwechseleinrichtung stellt sicher, daß sich die verschiedenen Zellkulturen eines bestimmten Behälters stets in gleicher Orientierung im Meßbereich befinden, so daß eine eindeutige örtliche Zuordnung des Meßbildes zur Probenanordnung gegeben ist.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Auswahl der Wellenlänge der Anregungsstrahlung und der Fluoreszenz nicht auf die angegebenen Werte beschränkt, sondern probenabhängig wählbar.

Auch kann die Probenwechseleinrichtung nicht nur ein Drehteller sein, sondern beispielsweise auch ein Roboter.

Auch ist eine direkte Strahlungsquellenmontage an der Geräteunterseite möglich, ohne daß es einer Strahlungsablenkung bedarf.

| BEZUGSZEICHENLISTE: | |
|---|---|
| A | Drehachse |
| D | Drehwelle |
| 10 | Gehäuse |
| 20 | erster abgeschlossener Raum |
| 22 | Klimatisierungseinrichtung |
| 25 | Drehteller |
| 30 | zweiter abgeschlossener Raum |
| 32 | Quarzglas |
| 33 | Intensitätssensor |
| 35 | Antriebsmotor |
| 36 | Kamera |
| 38 | Linse |
| 39 | Lichtleiter |
| 40 | Lichtquelle |
| 42 | Verschluß |
| 44 | Filterrad |
| 46 | Filter |
| 100 | Trennwand |
| 51, 52, 53, 54 | Behälter |
| 510, 520, 530, 540 | Proben, jeweils 4x4-Anordnung |

## Patentansprüche

1. Fluoreszenz-Meßvorrichtung mit:
einer Anregungsstrahlungs-Erzeugungseinrichtung (40) zum Erzeugen einer Anregungsstrahlung;
einer Strahlführungseinrichtung (38, 39) zum Richten der Anregungsstrahlung auf eine Probe (540), die in einem Meßbereich (32) angeordnet ist; und
Einer Fluoreszenzstrahlungs-Erfassungseinrichtung (36) zum erfassen der von der Probe (540) im Meßbereich emittierten Fluoreszenzstrahlung;
und
einer Probenwechseleinrichtung (25) zum Auswechseln der Probe (540) in dem Meßbereich gegen eine andere einer Mehrzahl von bereitgestellten Proben (510; 520; 530; 540), die derart gestaltet ist, daß sie dieselbe Probe (540) jeweils stets in derselben räumlichen Orientierung in dem Meßbereich anordnet;
wobei
sich die Probenwechseleinrichtung (25) in einem ersten abgeschlossenen Raum (20) befindet, der zum Einlaß der Anregungsstrahlung ein entsprechendes transparentes Fenster (32) aufweist, und die Proben (510; 520; 530; 540) jeweils in einem transparenten Behälter (51; 52; 53; 54) untergebracht sind, der von der Probenwechseleinrichtung (25) auf dem Boden des ersten abgeschlossenen Raums (20) verschiebbar ist;
die transparenten Behälter (51; 52; 53; 54) Petrischalen oder Mikrotitterplatten umfassen, in denen jeweils eine Mehrzahl von räumlich getrennten Zellkulturen vorsehbar sind,
sich die Fluoreszenzstrahlungs-Erfassungseinrichtung (36) in einem zweiten abgeschlossenen Raum (30) befindet, der an den ersten abgeschlossenen Raum (20) angrenzt und der zum Einlaß der Fluoreszenzstrahlung das transparente Fenster (32) aufweist, und die FluoreszenzstrahlungsErfassungseinrichtung (36) derart gestaltet ist, daß sie die Fluoreszenzstrahlung im Meßbereich mit einer räumlichen Auflösung erfaßt, welche zumindest so groß wie die einzelnen Zellkulturen ist; und
die Strahlführungseinrichtung (38, 39) einen im zweiten abgeschlossenen Raum (30) befindlichen Lichtleiter (39) oder Spiegel, mittels dem das Anregungslicht in den zweiten abgeschlossenen Raum (30) von außerhalb desselben einkoppelbar ist, sowie eine im zweiten abgeschlossenen Raum (30) befindliche Linseneinrichtung (38) umfaßt, mittels der das Anregungslicht vom Lichtleiter (39) auf das Fenster (32) richtbar und dieses gleichmäßig ausleuchtbar ist.

2. Fluoreszenz-Meßvorrichtung nach Anspruch 1, dadurch gekennzeichnet, daß die Fluoreszenzstrahlungs-Erfassungseinrichtung (36) derart gestaltet ist, daß sie die Fluoreszenzstrahlung im Meßbereich erfaßt.

3. Fluoreszenz-Meßvorrichtung nach Anspruch 1 oder 2, dadurch gekennzeichnet, daß die AnregungsstrahlungsErzeugungseinrichtung (40) eine Lichtquelle (40) zum Erzeugen polychromatischer Strahlung und eine vorzugsweise umschaltbare Filtereinrichtung (46) zum Herausfiltern der Anregungsstrahlung aufweist.

4. Fluoreszenz-Meßvorrichtung nach Anspruch 1, 2 oder 3, dadurch gekennzeichnet, daß der erste abgeschlossene Raum (20) ein Quarzglasfenster mit einer Transmission oberhalb einer Wellenlänge von 360 nm im Meßbereich aufweist.

5. Fluoreszenz-Meßvorrichtung nach Anspruch 4, dadurch gekennzeichnet, daß der zweite abgeschlossene Raum (30) ein Quarzglasfenster mit einer Transmission oberhalb einer Wellenlänge von 360 nm im Meßbereich aufweist.

6. Fluoreszenz-Meßvorrichtung nach Anspruch 5, dadurch gekennzeichnet, daß das Fenster am Boden angeordnet ist, so daß die Probe von unten bestrahlbar ist.

7. Fluoreszenz-Meßvorrichtung nach einem der Ansprüche 4 bis 6, dadurch gekennzeichnet, daß eine Intensitätserfassungseinrichtung (33) zum Erfassen der im Meßbereich vorliegenden Intensität der Anregungsstrahlung vorgesehen ist.

8. Fluoreszenz-Meßvorrichtung nach einem der vorhergehenden Ansprüche, dadurch gekennzeichnet, daß die Probenwechseleinrichtung (25) einen Drehteller umfaßt, in dem die Proben (510; 520; 530; 540) angebracht sind.

9. Vorrichtung nach Anspruch 8, dadurch gekennzeichnet, daß die transparenten Behälter ((51; 52; 53; 54) Petrischalen oder Mikrotitterplatten umfassen, in denen jeweils eine Mehrzahl von räumlich getrennten Zellkulturen oder Zellmonoschichten vorgesehen sind.

10. Fluoreszenz-Meßvorrichtung nach einem der vorhergehenden Ansprüche, dadurch gekennzeichnet, daß der erste abgeschlossene Raum (20) durch eine Klimatisierungseinrichtung (22) insbesondere hinsichtlich Temperatur, Luftfeuchte und CO₂-Gehalt klimatisierbar ist.

11. Fluoreszenz-Meßvorrichtung nach einem der vorhergehenden Ansprüche, dadurch gekennzeichnet, daß der erste abgeschlossene Raum (20) und/oder der zweite abgeschlossene Raum (30) lichtdicht gegenüber Umgebungslicht sind.

12. Fluoreszenz-Meßvorrichtung nach einem der vorhergehenden Ansprüche, gekennzeichnet durch eine Steuereinrichtung zum steuern der Anregungsstrahlungs-Erzeugungseinrichtung (40), der Fluoreszenzstrahlungs-Erfassungseinrichtung (36), einem Verschluß (42) und der Probenwechseleinrichtung (25).

13. Fluoreszenz-Meßvorrichtung nach einem der Ansprüche 7 bis 12, gekennzeichnet durch eine Auswerteeinrichtung zum Auswerten der Messungen unter Berücksichtigung der Intensität der Anregungsstrahlung.
